# EUROPÄISCHE PATENTSCHRIFT

(11) **EP 3 266 594 B1**
(45) Veröffentlichungstag und Bekanntmachung des Hinweises auf die Patenterteilung: **11.03.2020**
(21) Anmeldenummer: 16450014.2
(22) Anmeldetag: 07.07.2016
(51) Int. Cl.: B29C 67/00, B33Y 10/00, B33Y 30/00

(54) **VERFAHREN UND VORRICHTUNG ZUR LITHOGRAPHIEBASIERTEN GENERATIVEN FERTIGUNG VON DREIDIMENSIONALEN BAUTEILEN**
METHOD AND APPARATUS FOR LITHOGRAPHY-BASED GENERATIVE PRODUCTION OF THREE-DIMENSIONAL ARTICLES
PROCÉDÉ ET DISPOSITIF DE FABRICATION GÉNÉRATIVE PAR LITHOGRAPHIE DE COMPOSANTS TRIDIMENSIONNELS

(43) Veröffentlichungstag der Anmeldung: 10.01.2018
(73) Patentinhaber: Technische Universität Wien, 1040 Wien (AT)
(72) Erfinder: Ovsianikov, Aleksandr, A-1140 Wien (AT); Stampfl, Jürgen, A-1050 Wien (AT); Liska, Robert, A-2123 Schleinbach (AT); Gruber, Peter, A-1140 Wien (AT)
(74) Vertreter: Keschmann, Marc

(56) Entgegenhaltungen:
- EP-A1- 2 905 121
- WO-A1-2015/197794
- US-A- 5 753 171

## Beschreibung

Die Erfindung betrifft ein Verfahren zur lithographiebasierten generativen Fertigung von dreidimensionalen Bauteilen, bei dem durch Einwirkung elektromagnetischer Strahlung verfestigbares Material in einer Wanne vorliegt, eine Bauplattform in Abstand vom Wannenboden positioniert wird, zwischen der Bauplattform und dem Wannenboden befindliches Material ortsselektiv mit Hilfe einer Bestrahlungseinheit bestrahlt wird, wobei die elektromagnetische Strahlung von unten durch einen für die Strahlung zumindest bereichsweise durchlässigen Wannenboden in das Material eingebracht und nacheinander auf Fokuspunkte innerhalb des Materials fokussiert wird, wodurch jeweils ein am Fokuspunkt befindliches Volumenelement des Materials verfestigt wird, wobei die Verfestigung mittels Multiphotonenabsorption erfolgt.

Die Erfindung betrifft weiters eine Vorrichtung zur lithographiebasierten generativen Fertigung von dreidimensionalen Bauteilen, die insbesondere zur Durchführung eines solchen Verfahrens geeignet ist.

Lithographiebasierte generative Fertigung (L-GF, z.B. Stereolithographie) wird traditionell hauptsächlich für die Herstellung von Prototypen und Funktionsmustern verwendet. Durch technische Weiterentwicklungen rücken zusehends echte Produktionsanwendungen in den Fokus (z.B. transparente Zahnspangen, Hörgeräteschalen). Im Zuge dieser Entwicklungen wird es immer wichtiger, dass möglichst große Teile herstellbar sind. Ebenso von großer Bedeutung ist der erzielbare Durchsatz. Lithographiebasierte Techniken (z.B. Stereolithographie) bieten gegenüber anderen generativen Verfahren vor allem Vorteile hinsichtlich Auflösung, Präzision und Oberflächenqualität.

Derzeit verfügbare L-GF Verfahren belichten entweder von oben auf eine mit photosensitivem Material gefüllte Wanne, wie in der WO 93/08506 A1 beschrieben, oder von unten durch eine transparente Wanne, in der sich eine dünne Schicht aus photosensitivem Material befindet, siehe WO 01/40866 A2. Bei der Belichtung von oben bestehen zwei Schwierigkeiten: (1) Für große Bauteile sind sehr große Materialmengen erforderlich, da das gesamte Bauteil vollständig im photosensitiven Material versenkt werden muss. (2) Es müssen für gute Oberflächen sehr dünne Schicht aus photosensitivem Material aufgebracht werden, was für Schichtdicken unterhalb von 50µm sehr schwierig ist.

Auch bei der Belichtung von unten gibt es Schwierigkeiten: Das flüssige photosensitive Material befindet sich in diesem Fall zwischen der transparenten Wanne und der Bauplattform, die schichtweise nach oben verschoben wird. Trotz der Antihaftbeschichtung der Wanne haftet das Bauteil während des Bauvorgangs unerwünschterweise an der Wanne an. Beim Anheben der Bauplattform können so große Abzugskräfte entstehen, was insbesondere bei der Fertigung größerer Bauteile zu Problemen führt. Es gibt dazu zwar neue Ansätze (z.B. US 2014/361463 A1), die über Sauerstoffeinbringung eine Inhibierungsschicht zwischen Wanne und Bauteil erzeugen und so eine Anhaftung reduzieren. Allerdings besteht dann das Problem, dass das nachfließende Material in einen sehr dünnen Spalt fließen muss, was bei dickwandigeren Bauteilen oder hochviskosen Materialien problematisch ist.

Bei allen oben genannten Verfahren besteht zudem das Problem, dass bei Erhöhung der Auflösung die Bauzeiten sehr rasch ansteigen.

In der DE 10111422 A1 wurde ein Verfahren vorgeschlagen, bei dem die Verfestigung des flüssigen photosensitiven Materials durch Multiphotonenabsorption vorgenommen wird. Dazu strahlt man mit einem fokussierten Laserstrahl in das Bad des photosensitiven Materials ein, wobei die Bestrahlungsbedingungen für einen die Verfestigung auslösenden Mehrphotonenabsorptionsprozess nur in unmittelbarer Umgebung des Fokus erfüllt sind, sodass man den Fokus des Strahls nach Maßgabe der Geometriedaten des herzustellenden Formkörpers innerhalb des Badvolumens zu den zu verfestigenden Stellen führt. Die Bestrahlung des Materialbades erfolgt bei dem Verfahren gemäß der DE 10111422 A1 von oben, wobei die Strahlungsintensität so gewählt wird, dass die Flüssigkeit für die verwendete Strahlung oberhalb des Fokuspunktes im Wesentlichen transparent ist, sodass ein direktes Polymerisieren des Badmaterials ortsselektiv innerhalb des Badvolumens, d.h. auch weit unterhalb der Badoberfläche stattfindet.

Bei der Veränderung der Lage des Fokuspunkts entlang der optischen Achse des verwendeten optischen Abbildungssystems ergeben sich jedoch Abbildungsfehler, die mit zunehmendem Anteil von Material im optischen Pfad mit nicht optimal abgestimmtem Brechungsindex zunehmen. Dies ist besonders bei Verfahren von Nachteil, bei denen sehr feine Strukturen hergestellt werden und daher eine hohe Auflösung des Abbildungssystems erforderlich ist. Um die hohe Auflösung des optischen Abbildungssystems zu gewährleisten, muss der Brechungsindex des photosensitiven Materials auf das optische Abbildungssystem, oder umgekehrt, abgestimmt sein. Sollte das nicht der Fall sein, oder das Material seine Eigenschaften, zum Beispiel durch Änderung des Wassergehalts, während des Bauprozesses ändern, würde die erzielbare Auflösung der gebauten Strukturen abnehmen.

Für die Multiphotonenabsorptions-Strukturierung mit hoher Auflösung im Nanometerbereich wurde in der
DE 102011012484 A1 daher ein Verfahren vorgeschlagen, bei dem das Objektiv des optischen Abbildungssystems in das photosensitive Material eintaucht. Dadurch sind größere Bauteilhöhen mit hoher Auflösung realisierbar, die optische Abbildungseinheit ist aber im ständigen Kontakt mit dem photosensitiven Harz, was bei ungewollter Materialumwandlung, zum Beispiel durch Streulicht oder Umgebungslicht, zu einer Beschädigung der Optik führen kann.

In der EP 2905121 A1 ist ein Verfahren beschrieben, bei dem die Verfestigung des photosensitiven Materials ebenfalls mittels Multiphotonenabsorption stattfindet und die Belichtung des Bades von unten durch einen transparenten Boden der Materialwanne erfolgt. Die Fokussierung erfolgt auf Fokuspunkte, die in fixem Abstand vom Wannenboden liegen, wobei die Bauplattform mit fortschreitendem Arbeitsfortschritt in Höhenrichtung aus dem Bad gezogen wird, sodass Bauteile mit großer Höhe hergestellt werden können.

Ein Großteil der bisherigen Verfahren im Bereich der Multiphotonenabsorptions-Strukturierung zielt darauf ab, Strukturen mit sehr hoher Auflösung zu schreiben. Durch hochauflösende optische Abbildungssysteme, meist aus der Mikroskopie, werden dabei Auflösungen bis zu 50nm erzielt. Die hohe Auflösung bedingt kleine Fokuspunktvolumen, die durch Verwendung von optischen Abbildungssystemen mit hoher Vergrößerung und hoher numerischer Apertur erreicht werden. Durch die hohe numerische Apertur ist auch ein annähernd kugelförmiges Fokuspunktvolumen erzielbar (typischerweise kleiner als 1x1x1µm³). Bedingt durch das kleine Fokuspunktvolumen ist der Durchsatz solcher Anlagen allerdings sehr gering, da z.B. für ein Volumen von 1mm³ insgesamt mehr als 10⁹ Punkte belichtet werden müssen. Dies führt zu sehr langen Bauzeiten, was der Hauptgrund für den geringen industriellen Einsatz von Multiphotonenabsorptions-Verfahren ist.

Die vorliegende Erfindung zielt daher darauf ab, ein Verfahren und eine Vorrichtung der eingangs genannten Art dahingehend zu verbessern, dass der Bauteiledurchsatz erhöht wird ohne die Möglichkeit einer hohen Strukturauflösung zu verlieren.

Zur Lösung dieser Aufgabe besteht die Erfindung bei einem Verfahren der eingangs genannten Art darin, dass das Volumen des Fokuspunkts während des Verfahrens zumindest einmal variiert wird, sodass der Bauteil aus verfestigten Volumenelementen unterschiedlichen Volumens aufgebaut wird. Durch das variable Volumen des Fokuspunktes sind (bei kleinem Fokuspunktvolumen) hohe Auflösungen möglich. Gleichzeitig ist (bei großem Fokuspunktvolumen) eine hohe Schreibgeschwindigkeit (gemessen in mm³/h) erzielbar. Die Erfindung kombiniert also hohe Auflösung mit großem Durchsatz. Die Variation des Fokuspunktvolumens kann dabei zum Beispiel so genutzt werden, dass im Inneren des aufzubauenden Bauteils ein großes Fokuspunktvolumen verwendet wird, um den Durchsatz zu erhöhen, und an der Oberfläche des Bauteils ein kleineres Fokuspunktvolumen verwendet wird, um die Bauteiloberfläche mit hoher Auflösung auszubilden. Eine Vergrößerung des Fokuspunktvolumens ermöglicht einen höheren Strukturierungsdurchsatz, da das in einem Belichtungsvorgang verfestigte Materialvolumen vergrößert wird. Um bei hohem Durchsatz eine hohe Auflösung beizubehalten, können kleine Fokuspunktvolumina für feinere Strukturen und Oberflächen, und größere Fokuspunktvolumina für grobe Strukturen und/oder zum Füllen von Innenräumen verwendet werden.

Bei einer bevorzugten Verfahrensweise erfolgt die Variation des Fokusvolumens derart, dass das größte Fokuspunktvolumen während der Fertigung eines Bauteils größer 1µm³, bevorzugt größer 100µm³, insbesondere größer 10.000µm³ ist.

Das Prinzip der Multiphotonenabsorption wird im Rahmen der Erfindung genutzt, um im photosensitiven Materialbad einen photochemischen Vorgang zu initiieren. Als Folge der photochemischen Reaktion kommt es zur Veränderung des Materials in mindestens einen anderen Zustand, wobei es typischerweise zu einer Photopolymerisation kommt. Die Belichtung erfolgt dabei von unten durch einen für die elektromagnetische Strahlung transparenten Wannenboden. Das Prinzip der Multiphotonenabsorption beruht darauf, dass der genannte photochemische Vorgang nur in jenen Bereichen des Strahlengangs stattfindet, in denen eine für die Multiphotonenabsorption ausreichende Photonendichte vorliegt. Die höchste Photonendichte tritt im Brennpunkt des optischen Abbildungssystems auf, sodass die Multiphotonenabsorption mit ausreichender Wahrscheinlichkeit nur im Fokuspunkt auftritt. Außerhalb des Brennpunktes ist die Photonendichte geringer, sodass die Wahrscheinlichkeit der Multiphotonenabsorption außerhalb des Brennpunktes zu gering ist, um eine unumkehrbare Veränderung des Materials durch eine photochemische Reaktion zu bewirken. Die elektromagnetische Strahlung kann in der verwendeten Wellenlänge weitestgehend ungehindert das Material passieren und nur im Fokuspunkt kommt es zu einer Interaktion zwischen photosensitivem Material und elektromagnetischer Strahlung. Das Prinzip der Multiphotonenabsorption ist beispielsweise in Zipfel et al, "Nonlinear magic: multiphoton microscopy in the biosciences", NATURE BIOTECHNOLOGY VOLUME 21 NUMBER 11 NOVEMBER 2003, beschrieben.

Als Quelle für die elektromagnetische Strahlung kann es sich vorzugsweise um einen kollimierten Laserstrahl handeln. Der Laser kann sowohl eine oder mehrere, feste oder variable Wellenlängen emittieren. Insbesondere handelt es sich um einen kontinuierlichen oder gepulsten Laser mit Pulslängen im Nanosekunden-, Pikosekunden- oder Femtosekunden-Bereich. Ein gepulster Femtosekundenlaser bietet dabei den Vorteil, dass eine geringere mittlere Leistung für die Multiphotonenabsorption benötigt wird.

Unter photosensitivem Material wird jedes unter Baubedingungen fließfähige Material verstanden, das durch Multiphotonenabsorption im Fokuspunktvolumen in einen zweiten Zustand übergeht - beispielsweise durch Polymerisation. Die Materialveränderung muss sich dabei auf das Fokuspunktvolumen und dessen direkte Umgebung begrenzen. Die Veränderung der Substanzeigenschaften kann dauerhaft sein und beispielsweise in einer Veränderung von einem flüssigen in einen festen Zustand bestehen, kann jedoch auch nur vorübergehend sein. Auch eine dauerhafte Veränderung kann im Übrigen reversibel oder nicht reversibel sein. Die Änderung der Materialeigenschaften muss nicht zwingend vollständig von einem in den anderen Zustand übergehen, sondern kann auch als Mischform beider Zustände vorliegen.

Die Leistung der elektromagnetischen Strahlung und die Belichtungsdauer beeinflussen die Qualität des erzeugten Bauteils. Durch Anpassung der Strahlungsleistung und/oder der Belichtungsdauer kann das Volumen des Fokuspunktes in einem engen Bereich variiert werden. Bei zu hohen Strahlungsleistungen treten zusätzliche Prozesse auf, die zur Beschädigung des Bauteils führen können. Ist die Strahlungsleistung zu gering, kann sich keine dauerhafte Materialeigenschaftsänderung einstellen. Für jedes photosensitive Material gibt es daher typische Bauprozessparameter, die mit guten Bauteileigenschaften verbunden sind.

Die erfindungsgemäße Variation des Fokuspunktvolumens beruht hierbei jedoch nicht auf einer Änderung der Intensität der verwendeten elektromagnetischen Strahlung. Vielmehr wird bei der für den Bauprozess gewählten (optimalen) Strahlungsintensität gearbeitet, die während des Bauteilaufbaus unverändert gelassen wird. Das erfindungsgemäße Verfahren wird daher bevorzugt so durchgeführt, dass die Änderung des Fokuspunktvolumens bei gleichbleibender Strahlungsintensität vorgenommen wird.

Als Fokuspunktvolumen wird daher jenes Volumen eines belichteten Punktes nach dem Aufbereitungsschritt bei den typischen Bauprozessparametern verstanden. Unter der erfindungsgemäßen Änderung des Fokuspunktvolumens wird eine Veränderung der räumlichen Intensitätsverteilung im Fokuspunkt verstanden. Hierbei kann die räumliche Intensitätsverteilung des Fokuspunktes sowohl in eine oder mehrere Richtungen verändert werden. So kann zum Beispiel durch Reduktion der effektiven numerischen Apertur des optischen Abbildungssystems die Intensitätsverteilung in alle drei Raumrichtungen vergrößert werden. Bei der Verwendung eines diffraktiven optischen Elementes kann der Fokus in eine Linie oder Fläche verändert, oder die Anzahl der Fokuspunkte erhöht werden.

Eine bevorzugte Verfahrensweise der Erfindung sieht vor, dass die Änderung des Fokuspunktvolumens mittels einer Einheit bestehend aus wenigstens einem im Strahlengang zwischen der Quelle der elektromagnetischen Strahlung und einem auf den Fokuspunkt fokussierenden optischen Abbildungssystem angeordneten optischen Element vorgenommen wird.

Die Änderung des Fokuspunktvolumens mittels des wenigstens einen optischen Elements kann auf verschiedenste Weise erfolgen, wobei die nachfolgend angeführten Möglichkeiten auch miteinander kombiniert werden können.

Bevorzugt ist vorgesehen, dass die Änderung des Fokuspunktvolumens durch Variation der effektiven numerischen Apertur des optischen Abbildungssystems erfolgt. Unter numerischer Apertur des optischen Abbildungssystems werden dessen nominelle Eigenschaften unter optimalen Bedingungen mit der kleinsten möglichen Fokuspunktgröße verstanden. Kommt es durch Veränderung der optischen Parameter vor dem optischen Abbildungssystem zu größeren Fokuspunktvolumen, spricht man von der effektiven numerischen Apertur des Abbildungssystems.

Bevorzugt kann auch vorgesehen sein, dass die Änderung des Fokuspunktvolumens durch Variation des Strahldurchmessers entlang des Strahlengangs erfolgt.

Das Verfahren kann bevorzugt auch so durchgeführt werden, dass die Variation des Strahldurchmessers mittels einer insbesondere variablen Aufweitoptik oder einer verstellbaren Blende erfolgt. Unter einer Aufweitoptik wird ein optisches System verstanden, mit dem der Strahldurchmesser vergrößert oder verkleinert wird. Der Strahldurchmesser bestimmt zusammen mit der Brennweite des optischen Abbildungssystems das Fokuspunktvolumen. Bei konstanter Brennweite führt eine Veränderung des Strahldurchmessers daher zu einer Änderung der effektiven numerischen Apertur und damit zu einer Änderung des Fokuspunktvolumens. Die Aufweitoptik kann sowohl mit konstanter oder variabler Aufweitung ausgeführt sein. Im Falle einer variablen Aufweitung kann die Aufweitoptik zur Veränderung des Fokuspunktvolumens eingesetzt werden.

Eine Veränderung des Strahldurchmessers kann auch mit Hilfe einer verstellbaren Blende vorgenommen werden, wobei eine Verkleinerung des Strahldurchmessers beispielsweise zu einer Reduzierung der effektiven numerischen Apertur führt, wodurch sich Durchmesser und Länge des Fokuspunktvolumens erhöhen. Die Blende kann als eindimensionale Schlitzblende, als zweidimensionale Irisblende oder jegliche andere Blendenform ausgeführt werden.

Bevorzugt wird das wenigstens eine optische Element von einem diffraktiven optischen Element und/oder einer optischen Linse gebildet. Eine mögliche Anwendung eines diffraktiven optischen Elements liegt darin, aus dem eintreffenden Strahl mehrere Strahlen, welche sich im Austrittswinkel unterscheiden, zu formen. Die einzelnen Strahlen werden durch das optische Abbildungssystem auf die Fokusebene abgebildet, wobei die einzelnen Fokuspunkte der einzelnen Strahlen unterschiedliche Punkte in der Fokusebene darstellen. Je nach verwendetem diffraktiven optischen Element können hier ein oder mehrere Fokuspunkte abgebildet werden. Die Fokuspunkte können auch so nahe zueinander liegen, dass die einzelnen Punkte ineinander übergehen. In diesen Fall entstehen Linien oder Flächen. Das diffraktive optische Element kann statisch oder dynamisch sein. Bei dynamischen diffraktiven optischen Elementen spricht man von einem "spatial light modulator".

Die Einheit zur Veränderung des Fokuspunktvolumens kann auch ein optisches System zur Strahlformung enthalten. Ein solches optisches System kann aus zwei Zylinderlinsen mit variablem Abstand zur gezielten Kontrolle des Astigmatismus im optischen Abbildungssystem bestehen. Durch Variation des Linsenabstands kann eine Dimension des Fokuspunktvolumens gezielt beeinflusst werden.

Weiters kann die Einheit zur Veränderung des Fokuspunktvolumens auch ein oder mehrere schnell bewegte Strahlablenksysteme beinhalten, welche den Strahl in einem bekannten Winkel zu den anderen Ablenksystemen führt. In bevorzugter Weise stehen zwei Ablenksysteme im rechten Winkel zueinander. Während das eine Ablenksystem den Strahl durch das photosensitive Material führt, verbreitert das zweite das umgewandelte Materialvolumen durch eine schnelle Bewegung des Strahls orthogonal zur Strahlführungsrichtung.

Mit den genannten Maßnahmen zur Veränderung des Fokuspunktvolumens kann die Änderung des Fokuspunktvolumens in wenigstens eine, vorzugsweise in drei, senkrecht zueinander stehenden Raumrichtungen erfolgen.

Im Rahmen der beschriebenen Maßnahmen zur Veränderung des Fokuspunktvolumens kann die numerische Apertur des optischen Abbildungssystems klein gewählt werden, wobei die numerische Apertur vorzugsweise kleiner 0,8, vorzugsweise kleiner 0,2 gewählt ist.

Wie bereits erwähnt wird der Bauteil erfindungsgemäß so aufgebaut, dass die elektromagnetische Strahlung von unten durch einen für die Strahlung zumindest bereichsweise durchlässigen Wannenboden in das Material eingebracht und nacheinander auf eine Vielzahl von Fokuspunkten innerhalb des Materials fokussiert wird. Hierbei wird
so vorgegangen, dass die elektromagnetische Strahlung mittels einer vor dem optischen Abbildungssystem angeordneten Ablenkeinheit abgelenkt wird, um den Fokuspunkt in einer zum Wannenboden im Wesentlichen parallelen Ebene (X- und Y-Richtung) zu verstellen. Die Verstellung erfolgt jedes Mal, nachdem ein Volumenelement des Materials verfestigt wurde. Für die Ablenkung des Strahls können dabei beliebige Strahlablenkeinheiten eingesetzt werden, welche aus dem Stand der Technik bekannt sind. Beispielsweise kann eine separate Strahlablenkeinrichtung für eine Strahlablenkung in X-Richtung und eine Strahlablenkeinrichtung für eine Ablenkung in Y-Richtung vorgesehen werden. Zusätzlich kann die Strahlablenkungseinheit mit einem Positioniersystem kombiniert oder dadurch teilweise ersetzt werden, welches das Bildfeld des Abbildungssystems bewegt, um die Herstellung von Bauteilen mit größerer Erstreckung in X- und Y-Richtung zu ermöglichen. Dabei ist es unerheblich, ob das optische Abbildungssystem oder das Bauteil bewegt wird.

Eine bevorzugte Verfahrensweise sieht weiters vor, dass die Bauplattform mit fortschreitendem Baufortschritt schrittweise angehoben wird. Der Aufbau des Bauteils kann dabei z.B. schichtweise erfolgen. Es werden zuerst alle Volumenelemente in einer Ebene bzw. Schicht hergestellt, worauf die Bauplattform zur Ausbildung der nächsten Schicht angehoben wird. Dazu wird eine in vertikaler Richtung (Z-Richtung) verstellbare Bauplattform in dem photosensitiven Material angeordnet. An dieser Bauplattform haftet die erste durch multiphotoneninduzierte Materialumwandlung erzeugte Schicht des zukünftigen Bauteils an. Die zweite Schicht haftet an der ersten Schicht an und jede weitere Schicht haftet an der jeweils vorangehenden Schicht an, sodass das Bauteil durch schichtweisen Aufbau aus der Wanne herauswächst.

Besonders bevorzugt wird der Fokuspunkt hierbei im Abstand vom Wannenboden angeordnet. Typischerweise beträgt der Abstand des Fokuspunktes vom Wannenboden zwischen 20µm und 2mm. Auf Grund des Abstands zwischen Polymerisationszone und dem Wannenboden kann es zu keiner unerwünschten Anhaftung des umgewandelten Materials an der Wanne kommen. Zusätzlich kann frisches Material leichter zwischen Bauteil und Wanne nachfließen, um als Ausgangsmaterial für die folgenden Schichten zur Verfügung zu stehen. Da es zu keiner Anhaftung des Bauteils am Wannenboden kommt, sind keine Abzugskräfte beim Anheben der Bauplattform zu erwarten. Basis dieses Effekts ist die Tatsache, dass der photochemische Vorgang bei der Multiphotonenabsorption wie bereits erwähnt nur in einem gut definierten Fokusvolumen stattfinden kann. Wenn der Abstand zwischen Wannenboden und Bauschicht relativ groß gewählt wird, kann während des Bauprozesses Material in den Spalt zwischen Wannenboden und Bauteil nachfließen, wodurch ein weitestgehend kontinuierlicher Prozess ermöglicht wird.

Bei dem beschriebenen schichtweisen Aufbau des Bauteils kann der Normalabstand der Fokuspunkte vom Wannenboden konstant gehalten werden, weil die Bewegung des Bauteils in vertikaler Richtung durch die bewegliche Bauplattform realisiert wird. Dadurch bleiben die optischen Randbedingungen während des ganzen Bauprozesses konstant. Damit wird gegenüber dem Stand der Technik, bei dem der Fokus in vertikaler Richtung bewegt wird, der Vorteil erreicht, dass die elektromagnetische Strahlung nicht unterschiedlich tief ins photosensitive Material fokussiert werden muss, was zu tiefenabhängigen Variationen der Fokusqualität führen würde. Der konstant gehaltene Normalabstand wird vorzugsweise zwischen dem Wannenboden und dem Mittelpunkt des Fokuspunktvolumens gemessen. Alternativ kann der konstant gehaltene Normalabstand zwischen dem Wannenboden und der unteren Berandung des Fokuspunktvolumens gemessen werden.

Die erfindungsgemäße Änderung des Fokuspunktvolumens kann hierbei auch innerhalb ein und derselben Schicht erfolgen, sodass eine Schicht aus Volumenelementen unterschiedlichen Volumens zusammengesetzt wird. Es kann aber auch so vorgegangen werden, dass sich eine Schicht aus lauter gleich großen Volumenelementen zusammensetzt und dass ein geändertes Fokuspunktvolumen für die nächste Schicht angewendet wird.

Als optisches Abbildungssystem, das die elektromagnetische Strahlung auf den jeweiligen Fokuspunkt fokussiert, kann jegliches, nach dem Stand der Technik bekanntes, optisches System mit einer beliebigen Anzahl optischer Elemente zur Fokussierung eingesetzt werden. Die optische Abbildungseinheit kann vor oder nach der Strahlablenkungseinheit eingesetzt werden. Beispielsweise kann eine F-Theta Optik nach dem Strahlablenksystem mit einer moderaten numerischen Apertur von < 0.2 verwendet werden.

Zwischen der Strahlablenkungseinheit und der Fokussieroptik des optischen Abbildungssystems kann eine zusätzliche optische Strahlaufweitung oder -reduktion eingefügt sein. Dieses zusätzliche optische System kann die effektive numerische Apertur durch Änderung des Strahldurchmessers bei gleichbleibender Brennweite der optischen Abbildungseinheit vergrößern oder verkleinern. Jegliche Anpassungen nach dem Strahlablenkungssystem wirken sich jedoch auf die Strahlablenkgeschwindigkeit aus.

Ein weiterer Aspekt der Erfindung betrifft eine Vorrichtung zur lithographiebasierten generativen Fertigung von dreidimensionalen Bauteilen, insbesondere zur Durchführung eines Verfahrens nach dem ersten Aspekt der Erfindung. Die Vorrichtung umfasst eine Quelle elektromagnetischer Strahlung, eine Wanne mit einem zumindest bereichsweise für die Strahlung durchlässigen Boden, in die verfestigbares Material einfüllbar ist, eine Bauplattform, die in einstellbarer Höhe über dem Wannenboden gehalten ist, und eine Bestrahlungseinheit, die zur ortsselektiven Bestrahlung von zwischen der Bauplattform und dem Wannenboden befindlichen Material von unten durch den Wannenboden ansteuerbar ist, wobei die Bestrahlungseinheit ein optisches Abbildungssystem umfasst, um die Strahlung nacheinander auf Fokuspunkte innerhalb des Materials zu fokussieren, wodurch jeweils ein am Fokuspunkt befindliches Volumenelement des Materials mittels Multiphotonenabsorption verfestigbar ist. Die Vorrichtung ist dadurch gekennzeichnet, dass die Bestrahlungseinheit wenigstens ein im Strahlengang zwischen der Quelle der elektromagnetischen Strahlung und dem optischen Abbildungssystem angeordnetes optisches Element umfasst, welches zur Änderung des Volumens des Fokuspunkts ausgebildet ist.

Bevorzugt kann das wenigstens eine optische Element zur Veränderung der effektiven numerischen Apertur des Abbildungssystems verwendet werden.

Bevorzugt ist vorgesehen, dass das wenigstens eine optische Element zur Variation des Strahldurchmessers entlang des Strahlengangs vorhanden ist.

Bevorzugt ist vorgesehen, dass das wenigstens eine optische Element von einer variablen Aufweitoptik oder einer verstellbaren Blende gebildet ist.

Bevorzugt kann auch vorgesehen sein, dass das wenigstens eine optische Element von einem diffraktiven optischen Element und/oder einer optischen Linse gebildet wird.

Insbesondere kann das wenigstens eine optische Element ein Strahlformungssystem umfassen, das z.B. zwei in variablem Abstand zueinander gehaltene Zylinderlinsen umfasst.

Die Bestrahlungseinheit umfasst eine vor dem optischen Abbildungssystem angeordnete Ablenkeinheit, um den Fokuspunkt in einer zum Wannenboden im Wesentlichen parallelen Ebene zu verstellen.

Mit Vorteil ist eine mit der Bestrahlungseinheit zusammenwirkende Steuereinheit dazu vorbereitet, in aufeinanderfolgenden Bestrahlungsschritten in einer Schicht liegende Volumenelemente auf der Bauplattform zur Ausbildung einer Schicht mit vorgegebener Geometrie durch Steuerung der Bestrahlungseinheit zu verfestigen und nach den Bestrahlungsschritten für die Schicht die Relativposition der Bauplattform zum Wannenboden anzupassen, um so sukzessive den Bauteil in der gewünschten Form aufzubauen.

Die Erfindung wird nachfolgend anhand von in der Zeichnung schematisch dargestellten Ausführungsbeispielen näher erläutert. In dieser zeigen Fig. 1 eine Vorrichtung zur Durchführung des erfindungsgemäße Verfahrens, Fig. 2 eine Einheit zur Fokusvolumenanpassung, Fig. 3 eine abgewandelte Ausbildung der Einheit zur Fokusvolumenanpassung, Fig. 4 eine weitere abgewandelte Ausbildung der Einheit zur Fokusvolumenanpassung, Fig. 5 eine weitere abgewandelte Ausbildung der Einheit zur Fokusvolumenanpassung, Fig. 6 eine weitere abgewandelte Ausbildung der Einheit zur Fokusvolumenanpassung und die Fig. 7 bis 10 verschiedene Baustrategien unter Verwendung von großen und kleinen Volumenelementen.

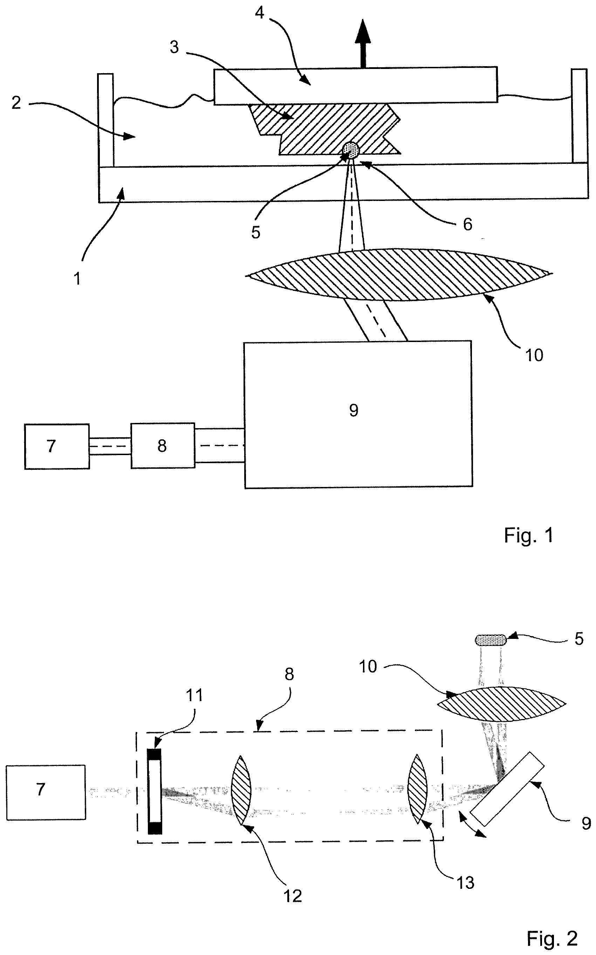

In Fig. 1 ist ersichtlich, dass eine vom Laser 7 emittierte elektromagnetische Welle durch eine Einheit zur Veränderung des Fokuspunktvolumens 8 und über eine Strahlablenkeinheit 9 geführt und mittels eines optischen Abbildungssystems 10 durch eine transparente Bodenplatte 1 in ein photosensitives Material 2 fokussiert wird. Im Brennpunkt 5 des optischen Abbildungssystems 10 kommt es zur Zustandsänderung des photosensitiven Materials 2, womit das Bauteil 3 aufgebaut wird. Das Bauteil 3 hängt an einer Bauplattform 4, die in vertikaler Richtung bewegt werden kann. Nachdem die aktuelle Schicht fertig belichtet wurde, wird die Bauplattform 4 angehoben und die nächste Schicht wird belichtet. Durch Verwendung eines Lasers 7 mit hoher Spitzenleistung ist der Einsatz von Multiphotonenabsorption möglich, sodass die Zustandsänderung des Materials nur im Fokus 5 stattfindet, nicht aber in der optisch "toten" Zone 6 zwischen dem Wannenboden 1 und der Bauplattform bzw. dem bereits gebildeten Bauteil. Somit kann es zu keiner Anhaftung des Bauteils an der transparenten Bodenplatte 1 kommen.

Sämtliche Elemente in Fig. 1 sind lediglich symbolisch dargestellt und können beliebig und entsprechend dem Wissen des Fachmanns erweitert werden, beispielsweise durch Einsatz zusätzlicher Linsensysteme, Blenden, Spiegel, Filter oder Strahlteiler.

Fig. 2 zeigt schematisch die Einheit 8 zur Veränderung des Fokuspunktvolumens. Die Einheit umfasst ein diffraktives optisches Element 11, welches den eintreffenden Strahl in zwei Strahlen aufspaltet, die ein System aus zwei Linsen 12 und 13 durchlaufen. Die Aufspaltung des Strahls erfolgt mit dem Ziel, zwei Punkte nebeneinander in der Fokusebene zu erzeugen. Überlappen einander beide Punkten, kann man auch von einer Linie sprechen.

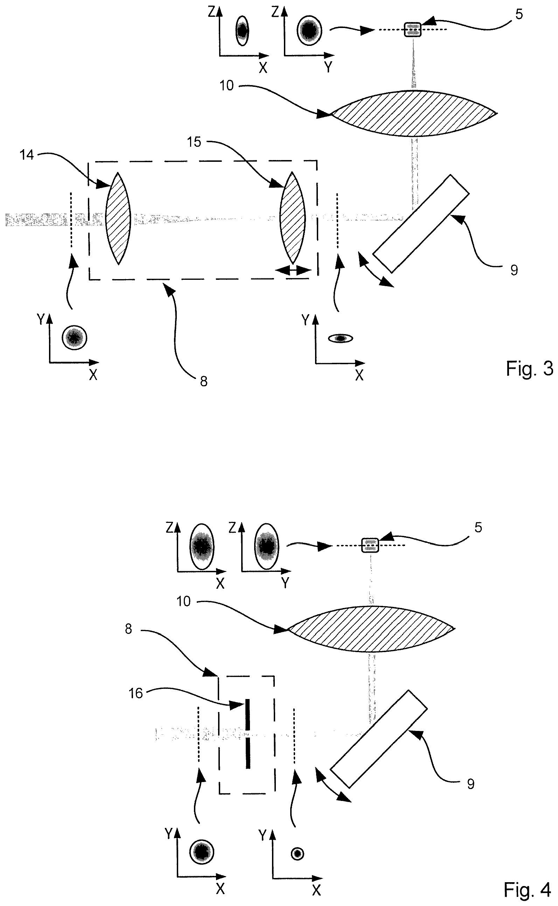

Fig. 3 zeigt eine abgewandelte Ausbildung der Einheit 8 zur Veränderung des Fokuspunktvolumens. Die Einheit 8 umfasst zwei voneinander beabstandete koaxiale Zylinderlinsen 14 und 15, welche von dem Strahl durchlaufen werden. Das Strahlprofil vor dem Eintritt in die Einheit 8, und zwar in der strichliert dargestellten Ebene, ist kreisrund. Am Austritt aus der Einheit 8 ist eine Komprimierung in Richtung der y-Achse zu beobachten. Daraus ergibt sich am Fokuspunkt 5 in der x,z-Ebene und in der y,z-Ebene die in der Zeichnung dargestellt Ausdehnung des Fokuspunktvolumens.
Durch Einstellung des Abstands zwischen den Zylinderlinsen 14 und 15 ändert sich das Volumen des Gesamt-Fokuspunkts 5.

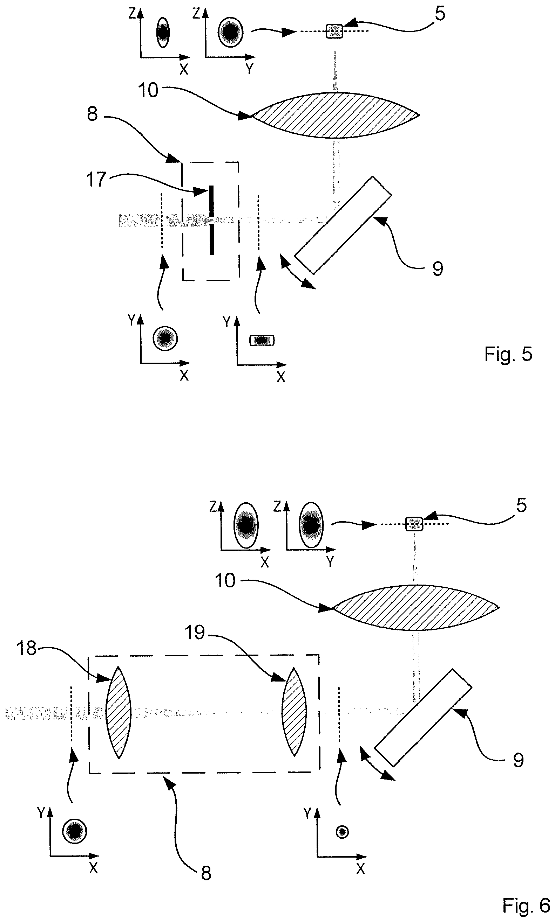

Ein ähnlicher Effekt ergibt sich bei Verwendung einer Schlitzblende 17, wie dies in der Ausbildung gemäß Fig. 5 gezeigt ist, wobei hier jedoch Intensitätsverluste durch das Abschneiden des Strahls entstehen.

Bei der Ausbildung gemäß Fig. 4 bewirkt eine Irisblende 16 eine Reduzierung der effektiven numerischen Apertur des Abbildungssystems, wodurch das Fokuspunktvolumen sowohl länger als auch breiter wird.

Der bei der Ausbildung gemäß Fig. 6 gezeigte Expander aus den Linsen 18 und 19 hat den gleichen Effekt wie die Irisblende 16, vermeidet aber Intensitätsverluste, indem der Strahldurchmesser verkleinert wird ohne den Strahl abzuschneiden.

Die in den Fig. 2 bis 6 gezeigten Möglichkeiten zur Änderung des Fokuspunktvolumens erfolgen insbesondere unter Verwendung von gepulstem Laserlicht mit einer Wellenlänge im Bereich von 400 bis 1600nm, wobei die Pulslänge zwischen 1fs und 1ns beträgt.

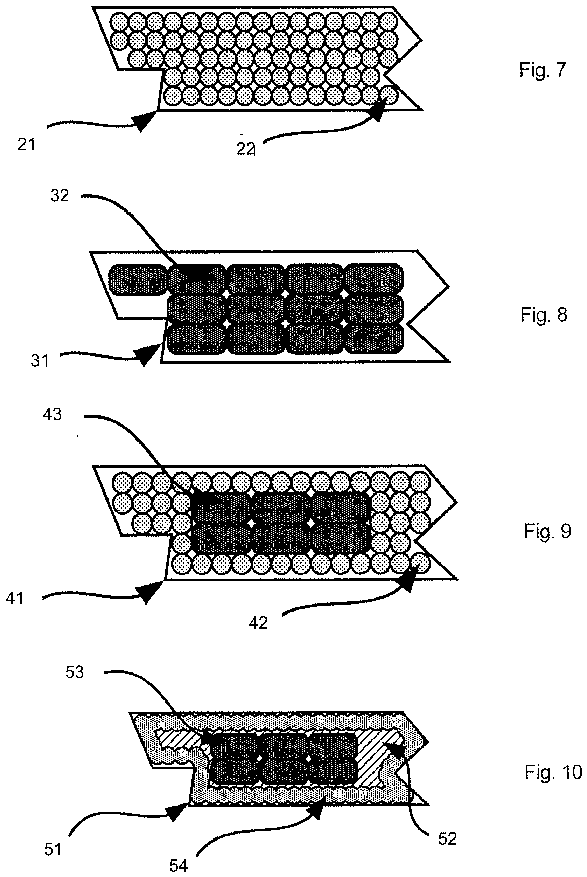

Fig. 7 zeigt einen Bauteil, der mittels eines Verfahrens aufgebaut wurde, bei dem ausschließlich kleine Fokuspunktvolumina 22 ohne Adaption des Volumens verfestigt werden. Durch die hohe Auflösung ergibt sich eine große Anzahl zu schreibender Punkte und damit eine hohe Prozesszeit pro Schicht. Diese Baustrategie ist vorteilhaft für kleine, hochaufgelöste Strukturen, wo eine Adaption des Fokuspunktvolumens keinen Vorteil bringen würde oder der Durchsatz nicht entscheidend ist.

Für den in Fig. 8 dargestellten Bauprozess wird nur ein großes Fokuspunktvolumen 32 verwendet ohne Adaption des Volumens. Die Baustrategie hat einen hohen Durchsatz, aber niedrige Auflösung. Das Fokuspunktvolumen wird durch die optische Einheit 8 kontrolliert, wobei die Fläche des Fokuspunktvolumens vergrößert und die effektive numerische Apertur auf die gewünschte Schichtdicke angepasst wird. Diese Baustrategie ist vorteilhaft für Bauteile, die keine hohe Auflösung benötigen, bei denen aber hoher Durchsatz gefordert wird.

Der mögliche Ablauf eines Bauprozesses mit zwei unterschiedlichen Fokuspunktvolumina wird in Fig. 9 gezeigt. Durch Adaption des Fokuspunktvolumens während des Bauprozesses durch die optische Einheit 8 reduziert sich die Prozesszeit pro Schicht. Die zu bauende Struktur 41 wird Schicht für Schicht abwechselnd aus feinen 42 und groben Füllvolumina 43 aufgebaut. Mit dem feinen Füllvolumina 42 werden jene Teile der Struktur belichtet, die nicht mit dem groben Füllvolumen 43 erreicht werden können. Es ist von Vorteil zuerst hochaufgelöste Teile mit dem kleinen Fokuspunktvolumen 42 zu schreiben und danach das innere Volumen zu füllen, da es durch bereits gebaute Strukturen zur Verzerrung des Fokuspunkts kommen kann. Das adaptive Fokuspunktvolumen ermöglicht die Herstellung von Bauteilen mit sowohl hoher Auflösung als auch hohem Durchsatz. Diese Baustrategie eignet sich für Bauteile mit hoher Auflösung mit leichter Oberflächenrauigkeit.

Der Ablauf von Baustrategie in Fig. 10 ist ähnlich der in Fig. 9 dargestellten Baustrategie, außer dass nun die Oberfläche des Bauteils mit einem zusätzlichen kleinen Fokuspunktvolumen 54 und kleiner Schichtdicke gebaut wird. Die drei Fokuspunktvolumina werden folgend benannt: das feine Füllvolumen 52, das grobe Füllvolumen 53 und das Oberflächenvolumen 54. Das Oberflächenvolumen besitzt das kleinste Volumen und damit die höchste Auflösung für gute Formwiedergabe von Ecken und Kanten. Das feine Füllvolumen 52 ist gleich oder größer dem Oberflächenvolumen 54 und füllt Lücken, die durch das grobe Füllvolumen 53 nicht erreicht werden können. Diese Baustrategie eignet sich für Bauteile, bei denen eine ausgezeichnete Formwiedergabe, Oberflächenqualität und hoher Durchsatz gefordert werden.

## Patentansprüche

1. Verfahren zur lithographiebasierten generativen Fertigung von dreidimensionalen Bauteilen (3), bei dem durch Einwirkung elektromagnetischer Strahlung verfestigbares Material (2) in einer Wanne vorliegt, eine Bauplattform (4) in Abstand vom Wannenboden (1) positioniert wird, zwischen der Bauplattform (4) und dem Wannenboden (1) befindliches Material (2) ortsselektiv mit Hilfe einer Bestrahlungseinheit bestrahlt wird, wobei die elektromagnetische Strahlung von unten durch einen für die Strahlung zumindest bereichsweise durchlässigen Wannenboden der Wanne (1) in das Material (2) eingebracht und nacheinander auf Fokuspunkte (5) innerhalb des Materials (2) fokussiert wird, wodurch jeweils ein am Fokuspunkt (5) befindliches Volumenelement des Materials (2) verfestigt wird, wobei die Verfestigung mittels Multiphotonenabsorption erfolgt, wobei die elektromagnetische Strahlung mittels einer vor dem optischen Abbildungssystem (10) angeordneten Ablenkeinheit (9) abgelenkt wird,
**dadurch gekennzeichnet, dass** das Volumen des Fokuspunkts (5) während des Verfahrens zumindest einmal variiert wird, sodass der Bauteil (3) aus verfestigten Volumenelementen unterschiedlichen Volumens aufgebaut wird, wobei die Ablenkeinheit (9) ausgebildet ist, um den Fokuspunkt (5) in einer zum Wannenboden (1) im Wesentlichen parallelen Ebene zu verstellen.

2. Verfahren nach Anspruch 1, **dadurch gekennzeichnet, dass** die Änderung des Fokuspunktvolumens mittels wenigstens eines im Strahlengang zwischen der Quelle der elektromagnetischen Strahlung und einem auf den Fokuspunkt (5) fokussierenden optischen Abbildungssystem (10) angeordneten optischen Elements (8) vorgenommen wird.

3. Verfahren nach Anspruch 2, **dadurch gekennzeichnet, dass** die Änderung des Fokuspunktvolumens durch Variation der effektiven numerischen Apertur des optischen Abbildungssystems (10) erfolgt.

4. Verfahren nach Anspruch 1, 2 oder 3, **dadurch gekennzeichnet, dass** die Änderung des Fokuspunktvolumens durch Variation des Strahldurchmessers entlang des Strahlengangs erfolgt.

5. Verfahren nach einem der Ansprüche 1 bis 4, **dadurch gekennzeichnet, dass** die Variation des Strahldurchmessers mittels einer variablen Aufweitoptik oder einer verstellbaren Blende erfolgt.

6. Verfahren nach einem der Ansprüche 2 bis 5, **dadurch gekennzeichnet, dass** das wenigstens eine optische Element von einem diffraktiven optischen Element und/oder einer optischen Linse gebildet wird.

7. Verfahren nach einem der Ansprüche 2 bis 6, **dadurch gekennzeichnet, dass** das wenigstens eine optische Element (8) ein Strahlformungssystem umfasst, das z.B. zwei in variablem Abstand zueinander gehaltene Zylinderlinsen (14,15) umfasst.

8. Verfahren nach einem der Ansprüche 1 bis 7, **dadurch gekennzeichnet, dass** die numerische Apertur des optischen Abbildungssystems kleiner 0,8, vorzugsweise kleiner 0,2 gewählt ist.

9. Verfahren nach einem der Ansprüche 1 bis 8, **dadurch gekennzeichnet, dass** die Änderung des Fokuspunktvolumens in wenigstens einer, vorzugsweise in drei, senkrecht zueinander stehenden Raumrichtungen erfolgt.

10. Verfahren nach einem der Ansprüche 1 bis 9, **dadurch gekennzeichnet, dass** die Bauplattform (4) mit fortschreitendem Baufortschritt schrittweise angehoben wird.

11. Verfahren nach einem der Ansprüche 1 bis 10, **dadurch gekennzeichnet, dass** der Fokuspunkt (5) im Abstand vom Wannenboden (1) angeordnet ist.

12. Verfahren nach einem der Ansprüche 1 bis 11, **dadurch gekennzeichnet, dass** der Normalabstand des Fokuspunktes (5) vom Wannenboden (1) bei variierendem Fokuspunktvolumen konstant gehalten wird.

13. Verfahren nach einem der Ansprüche 1 bis 12, **dadurch gekennzeichnet, dass** Volumenelemente an der Oberfläche des herzustellenden Bauteils (3) aus verfestigten Volumenelementen mit kleinerem Volumen aufgebaut werden als verfestigte Volumenelemente im Inneren des Bauteils (3).

14. Verfahren nach einem der Ansprüche 1 bis 13, **dadurch gekennzeichnet, dass** das größte Fokuspunktvolumen größer 1µm³, bevorzugt größer 100µm³, insbesondere größer 10.000µm³ ist.

15. Vorrichtung zur lithographiebasierten generativen Fertigung von dreidimensionalen Bauteilen (3), zur Durchführung eines Verfahrens nach einem der Ansprüche 1 bis 14, umfassend eine Quelle elektromagnetischer Strahlung, eine Wanne mit einem zumindest bereichsweise für die Strahlung durchlässigen Wannenboden (1), in die verfestigbares Material (2) einfüllbar ist, eine Bauplattform (4), die in einstellbarer Höhe über dem Wannenboden (1) gehalten ist, ein optisches Ablenksystem (9), und eine Bestrahlungseinheit, die zur ortsselektiven Bestrahlung von zwischen der Bauplattform (4) und dem Wannenboden (1) befindlichen Materials (2) von unten durch den Wannenboden (1) ansteuerbar ist, wobei die Bestrahlungseinheit ein optisches Abbildungssystem (10) umfasst, um die Strahlung nacheinander auf Fokuspunkte (5) innerhalb des Materials (2) zu fokussieren, wodurch jeweils ein am Fokuspunkt (5) befindliches Volumenelement des Materials (2) mittels Multiphotonenabsorption verfestigbar ist, wobei die elektromagnetische Strahlung mittels der vor dem optischen Abbildungssystem (10) angeordneten Ablenkeinheit (9) abgelenkt wird,
**dadurch gekennzeichnet, dass** die Bestrahlungseinheit wenigstens ein im Strahlengang zwischen der Quelle der elektromagnetischen Strahlung und dem optischen Abbildungssystem (10) angeordnetes optisches Element (8) umfasst, welches zur Änderung des Volumens des Fokuspunkts (5) ausgebildet ist, wobei die Ablenkeinheit (9) ausgebildet ist, um den Fokuspunkt (5) in einer zum Wannenboden (1) im Wesentlichen parallelen Ebene zu verstellen.

16. Vorrichtung nach Anspruch 15, **dadurch gekennzeichnet, dass** das wenigstens eine optische Element (8) zur Änderung der effektiven numerische Apertur des Abbildungssystems ausgebildet ist.

17. Vorrichtung nach Anspruch 16, **dadurch gekennzeichnet, dass** das wenigstens eine optische Element (8) zur Variation des Strahldurchmessers entlang des Strahlengangs eingerichtet ist.

18. Vorrichtung nach Anspruch 16 oder 17, **dadurch gekennzeichnet, dass** das wenigstens eine optische Element (8) von einer variablen Aufweitoptik oder einer verstellbaren Blende gebildet ist.

19. Vorrichtung nach Anspruch 16, 17 oder 18, **dadurch gekennzeichnet, dass** das wenigstens eine optische Element (8) von einem diffraktiven optischen Element und/oder einer optischen Linse gebildet wird.

20. Vorrichtung nach einem der Ansprüche 16 bis 19, **dadurch gekennzeichnet, dass** das wenigstens eine optische Element (8) ein Strahlformungssystem umfasst, das z.B. zwei in variablem Abstand zueinander gehaltene Zylinderlinsen (14,15) umfasst.

21. Vorrichtung nach einem der Ansprüche 15 bis 20, **dadurch gekennzeichnet, dass** die numerische Apertur des optischen Abbildungssystems kleiner 0,8 gewählt ist.

22. Vorrichtung nach einem der Ansprüche 15 bis 21, **dadurch gekennzeichnet, dass** eine mit der Bestrahlungseinheit zusammenwirkende Steuereinheit dazu vorbereitet ist, in aufeinanderfolgenden Bestrahlungsschritten in einer Schicht liegende Volumenelemente auf der Bauplattform (4) zur Ausbildung einer Schicht mit vorgegebener Geometrie durch Steuerung der Bestrahlungseinheit zu verfestigen und nach den Bestrahlungsschritten für die Schicht die Relativposition der Bauplattform (4) zum Wannenboden (1) anzupassen, um so sukzessive den Bauteil (3) in der gewünschten Form aufzubauen.

23. Vorrichtung nach einem der Ansprüche 15 bis 22, **dadurch gekennzeichnet, dass** die Bestrahlungseinheit zur Einstellung eines Fokuspunktvolumens von größer 1µm³, bevorzugt größer 100µm³, insbesondere größer 10.000µm³ ausgebildet ist.

## Claims

1. A method for the lithography-based generative production of three-dimensional components (3), in which a material (2) solidifiable by exposure to electromagnetic radiation is present in a tank, a construction platform (4) is positioned at a distance from the tank bottom (1), material (2) present between the construction platform (4) and the tank bottom (1) is position-selectively radiated by a radiation unit, wherein the electromagnetic radiation is introduced into the material (2) from below, through a tank bottom (1) of the tank permeable to the radiation at least in certain areas, and successively focused on focal points (5) within the material (2), whereby a volume element of the material (2) respectively present at a focal point (5) is solidified, wherein the solidification is effected by multiphoton absorption, wherein the electromagnetic radiation is deflected by a deflection unit (9) disposed upstream of the optical imaging system (10), **characterized in that** the volume of the focal point (5) is varied at least once during the method such that the component (3) is built up from solidified volume elements of different volumes, wherein the deflection unit (9) is devised in order to adjust the focal point (5) in a plane substantially parallel with the tank bottom (1) .

2. A method according to claim 1, **characterized in that** the change of the focal point volume is performed by at least one optical element (8) disposed in the optical path between the source of electromagnetic radiation and an optical imaging system (10) focusing on the focal point (5).

3. A method according to claim 2, **characterized in that** the change of the focal point volume is performed by a variation of the effective numerical aperture of the optical imaging system. (10).

4. A method according to claim 1, 2 or 3, **characterized in that** the change of the focal point volume is performed by a variation of the beam diameter along the optical path.

5. A method according to any one of claims 1 to 4, **characterized in that** the variation of the beam diameter is performed by a variable expansion optics or an adjustable aperture.

6. A method according to any one of claims 2 to 5, **characterized in that** the at least one optical element is comprised of a diffractive optical element and/or an optical lens.

7. A method according to any one of claims 2 to 6, **characterized in that** the at least one optical element (8) comprises a beam forming system comprising, for instance, two cylindrical lenses (14,15) held at a variable distance relative to each other.

8. A method according to any one of claims 1 to 7, **characterized in that** the numerical aperture of the optical imaging system is selected to be smaller than 0.8, preferably smaller than 0.2.

9. A method according to any one of claims 1 to 8, **characterized in that** the change of the focal point volume is performed at least in one, preferably three, spatial directions perpendicular to one another.

10. A method according to any one of claims 1 to 9, **characterized in that** the construction platform (4) is stepwisely lifted during the ongoing build progress.

11. A method according to any one of claims 1 to 10, **characterized in that** the focal point (5) is located at a distance from the tank bottom (1).

12. A method according to any one of claims 1 to 11, **characterized in that** the normal distance of the focal point (5) from the tank bottom (1) is kept constant at a varying focal point volume.

13. A method according to any one of claims 1 to 12, **characterized in that** volume elements on the surface of the component (3) to be produced are built of solidified volume elements with smaller volumes than solidified volume elements in the interior of the component (3).

14. A method according to any one of claims 1 to 13, **characterized in that** the largest focal point volume is larger than 1µm³, preferably larger than 100µm³, in particular larger than 10,000µm³.

15. A device for the lithography-based generative production of three-dimensional components (3), for carrying out a method according to any one of claims 1 to 14, comprising a source of electromagnetic radiation, a tank with a tank bottom (1) permeable to the radiation at least in certain areas, into which material (2) to be solidified can be filled, a construction platform (4) held at an adjustable level above the tank bottom (1), an optional deflection system (9) and a radiation unit actuatable for the position-selective radiation from below through the tank bottom (1) of material (2) present between the construction platform (4) and the tank bottom (1), wherein the radiation unit comprises an optical imaging system (10) for successively focusing the radiation on focal points (5) within the material (2), whereby a volume element of the material (2) respectively present at a focal point (5) is solidifiable by multiphoton absorption, wherein the electromagnetic radiation is deflected by the deflection unit (9) disposed upstream of the optical imaging system (10), **characterized in that** the radiation unit comprises at least one optical element (8) disposed in the optical path between the source of electromagnetic radiation and the optical imaging system (10), which optical element is designed to change the volume of the focal point (5), wherein the deflection unit (9) is devised in order to adjust the focal point (5) in a plane substantially parallel with the tank bottom (1) .

16. A device according to claim 15, **characterized in that** the at least one optical element (8) is designed to change the effective numerical aperture of the imaging system.

17. A device according to claim 16, **characterized in that** the at least one optical element (8) is arranged for varying the beam diameter along the optical path.

18. A device according to claim 16 or 17, **characterized in that** the at least one optical element (8) is comprised of a variable expansion optics or an adjustable aperture.

19. A device according to claim 16, 17 or 18, **characterized in that** the at least one optical element (8) is comprised of a diffractive optical element and/or an optical lens.

20. A device according to any one of claims 16 to 19, **characterized in that** the at least one optical element (8) comprises a beam forming system including, for instance, two cylindrical lenses (14,15) held at a variable distance relative to each other.

21. A device according to any one of claims 15 to 20, **characterized in that** the numerical aperture of the optical imaging system is selected to be smaller than 0.8.

22. A device according to any one of claims 15 to 21, **characterized in that** a control unit cooperating with the radiation unit is provided for solidifying in successive radiation steps volume elements located in a layer on the construction platform (4) so as to form a layer of pregiven geometry by control of the radiation unit and after the radiation steps for the layer, adapting the relative position of the construction platform (4) to the tank bottom (1) so as to successively build up the component (3) in the desired shape.

23. A device according to any one of claims 15 to 22, **characterized in that** the radiation unit is arranged to adjust a focal point volume larger than 1µm³, preferably larger than 100µm³, in particular larger than 10,000µm³.

## Revendications

1. Procédé de fabrication générative par lithographie de composants tridimensionnels (3), dans lequel un matériau (2) solidifiable sous l'action d'un rayonnement électromagnétique est présent dans une cuve, une plateforme de construction (4) est positionnée à distance du fond de cuve (1), un matériau (2) se trouvant entre la plateforme de construction (4) et le fond de cuve (1) est irradié de manière localement sélective à l'aide d'une unité d'irradiation, dans lequel le rayonnement électromagnétique est introduit depuis le bas par un fond de cuve de la cuve (1) perméable au moins par zone au rayonnement dans le matériau (2) et est focalisé peu à peu sur des points de focalisation (5) à l'intérieur du matériau (2), moyennant quoi respectivement un élément volumique du matériau (2) se trouvant au point de focalisation (5) est solidifié, dans lequel la solidification a lieu au moyen d'une absorption multiphotonique, dans lequel le rayonnement électromagnétique est dévié au moyen d'une unité de déviation (9) agencée devant le système d'imagerie optique (10),
**caractérisé en ce que** le volume du point de focalisation (5) est varié au moins une fois pendant le procédé de sorte que le composant (3) est constitué par des éléments volumiques solidifiés de différents volumes, dans lequel l'unité de déviation (9) est réalisée pour déplacer le point de focalisation (5) dans un plan sensiblement parallèle au fond de cuve (1).

2. Procédé selon la revendication 1, **caractérisé en ce que** la modification du volume de point de focalisation est réalisée au moyen d'au moins un élément optique (8) agencé dans le trajet des faisceaux entre la source du rayonnement électromagnétique et un système d'imagerie optique (10) focalisé sur le point de focalisation (5).

3. Procédé selon la revendication 2, **caractérisé en ce que** la modification du volume de point de focalisation a lieu par variation de l'ouverture numérique effective du système d'imagerie optique (10).

4. Procédé selon la revendication 1, 2 ou 3, **caractérisé en ce que** la modification du volume de point de focalisation a lieu par variation du diamètre de faisceau le long du trajet des faisceaux.

5. Procédé selon l'une quelconque des revendications 1 à 4, **caractérisé en ce que** la variation du diamètre de faisceau a lieu au moyen d'une optique d'écartement variable ou d'un diaphragme réglable.

6. Procédé selon l'une quelconque des revendications 2 à 5, **caractérisé en ce que** l'au moins un élément optique est formé par un élément optique diffractif et/ou une lentille optique.

7. Procédé selon l'une quelconque des revendications 2 à 6, **caractérisé en ce que** l'au moins un élément optique (8) comprend un système de formation de faisceau, qui comprend par exemple deux lentilles cylindriques (14, 15) maintenues à une distance variable l'une de l'autre.

8. Procédé selon l'une quelconque des revendications 1 à 7, **caractérisé en ce que** l'ouverture numérique du système d'imagerie optique est choisie inférieure à 0,8, de préférence inférieure à 0,2.

9. Procédé selon l'une quelconque des revendications 1 à 8, **caractérisé en ce que** la modification du volume de point de focalisation a lieu dans au moins une, de préférence dans trois, directions spatiales perpendiculaires l'une à l'autre.

10. Procédé selon l'une quelconque des revendications 1 à 9, **caractérisé en ce que** la plateforme de construction (4) est soulevée pas à pas avec la progression de la construction.

11. Procédé selon l'une quelconque des revendications 1 à 10, **caractérisé en ce que** le point de focalisation (5) est agencé à distance du fond de cuve (1).

12. Procédé selon l'une quelconque des revendications 1 à 11, **caractérisé en ce que** la distance normale du point de focalisation (5) par rapport au fond de cuve (1) est maintenue constante en cas de volume de point de focalisation variant.

13. Procédé selon l'une quelconque des revendications 1 à 12, **caractérisé en ce que** des éléments volumiques sont constitués au niveau de la surface du composant à fabriquer (3) d'éléments volumiques solidifiés de plus petit volume que des éléments volumiques solidifiés à l'intérieur du composant (3).

14. Procédé selon l'une quelconque des revendications 1 à 13, **caractérisé en ce que** le plus grand volume de point de focalisation est supérieur à 1 µm³, de préférence supérieur à 100 µm³, en particulier supérieur à 10 000 µm³.

15. Dispositif de fabrication générative par lithographie de composants tridimensionnels (3), pour la réalisation d'un procédé selon l'une quelconque des revendications 1 à 14, comprenant une source de rayonnement électromagnétique, une cuve avec un fond de cuve (1) perméable au moins par zone au rayonnement, dans laquelle un matériau (2) solidifiable peut être rempli, une plateforme de construction (4), qui est maintenue à une distance réglable au-dessus du fond de cuve (1), un système de déviation optique (9), et une unité d'irradiation, qui peut être commandée depuis le bas par le fond de cuve (1) pour l'irradiation localement sélective de matériau (2) se trouvant entre la plateforme de construction (4) et le fond de cuve (1), dans lequel l'unité d'irradiation comprend un système d'imagerie optique (10), afin de focaliser le rayonnement peu à peu sur des points de focalisation (5) à l'intérieur du matériau (2), moyennant quoi respectivement un élément volumique du matériau (2) se trouvant au point de focalisation (5) est solidifiable au moyen d'une absorption multiphotonique, dans lequel le rayonnement électromagnétique est dévié au moyen de l'unité de déviation (9) agencée devant le système d'imagerie optique (10),
**caractérisé en ce que** l'unité d'irradiation comprend au moins un élément optique (8) agencé dans le trajet des faisceaux entre la source du rayonnement électromagnétique et le système d'imagerie optique (10), lequel est réalisé pour la modification du volume du point de focalisation (5), dans lequel l'unité de déviation (9) est réalisée pour déplacer le point de focalisation (5) dans un plan sensiblement parallèle au fond de cuve (1).

16. Dispositif selon la revendication 15, **caractérisé en ce que** l'au moins un élément optique (8) est réalisé pour la modification de l'ouverture numérique effective du système d'imagerie.

17. Dispositif selon la revendication 16, **caractérisé en ce que** l'au moins un élément optique (8) est aménagé pour la variation du diamètre de faisceau le long du trajet des faisceaux.

18. Dispositif selon la revendication 16 ou 17, **caractérisé en ce que** l'au moins un élément optique (8) est formé par une optique d'écartement variable ou un diaphragme réglable.

19. Dispositif selon la revendication 16, 17 ou 18, **caractérisé en ce que** l'au moins un élément optique (8) est formé par un élément optique diffractif et/ou une lentille optique.

20. Dispositif selon l'une quelconque des revendications 16 à 19, **caractérisé en ce que** l'au moins un élément optique (8) comprend un système de formation de faisceau, qui comprend par exemple deux lentilles cylindriques (14, 15) maintenues à une distance variable l'une de l'autre.

21. Dispositif selon l'une quelconque des revendications 15 à 20, **caractérisé en ce que** l'ouverture numérique du système d'imagerie optique est choisie inférieure à 0,8.

22. Dispositif selon l'une quelconque des revendications 15 à 21, **caractérisé en ce qu'**une unité de commande coopérant avec l'unité d'irradiation est préparée pour solidifier dans des étapes d'irradiation successives des éléments volumiques situés dans une couche sur la plateforme de construction (4) pour la réalisation d'une couche à géométrie prédéfinie par commande de l'unité d'irradiation et adapter après les étapes d'irradiation pour la couche la position relative de la plateforme de construction (4) par rapport au fond de cuve (1) pour construire ainsi progressivement le composant (3) dans la forme souhaitée.

23. Dispositif selon l'une quelconque des revendications 15 à 22, **caractérisé en ce que** l'unité d'irradiation est réalisée pour le réglage d'un volume de point de focalisation supérieur à 1 µm³, de préférence supérieur à 100 µm³, en particulier supérieur à 10 000 µm³.
